# FASCICULE DE BREVET EUROPEEN

(11) **EP 3 378 176 B1**
(45) Date de publication et mention de la délivrance du brevet: **18.09.2019**
(21) Numéro de dépôt: 16797586.1
(22) Date de dépôt: 17.11.2016
(51) Int. Cl.: H04B 15/06, H01R 13/6581

(54) **APPAREIL ELECTRONIQUE A EMISSIONS RADIO PARASITES LIMITEES**
ELEKTRONISCHE VORRICHTUNG MIT BEGRENZTEN UNECHTEN RADIOEMISSIONEN
ELECTRONIC APPARATUS WITH LIMITED SPURIOUS RADIO EMISSIONS

(30) Priorité: 19.11.2015 FR 1561162
(43) Date de publication de la demande: 26.09.2018
(73) Titulaire: Sagemcom Broadband SAS, 92500 Rueil-Malmaison (FR)
(72) Inventeur: TISNE, Alain, 92500 Rueil-Malmaison (FR)
(74) Mandataire: Lavialle, Bruno François Stéphane
(86) Numéro de dépôt international: PCT/EP2016/078083
(87) Numéro de publication internationale: WO 2017/085232

(56) Documents cités:
- EP-A1- 2 472 676
- US-A1- 2010 231 459
- US-A1- 2014 073 182
- US-A1- 2015 207 273

## Description

La présente invention concerne la protection des appareils électroniques contre les signaux radio parasites.

### ETAT DE LA TECHNIQUE

Il est connu des appareils électroniques comprenant au moins une carte électronique pourvu d'un connecteur de raccordement externe et d'un dispositif de transmission radio comportant au moins une antenne.

Dans de tels appareils, on rencontre des dispositifs de transmission radio comme des dispositifs de télécommunication mobile de type 2G, 3G ou 4G, ou des dispositifs de communication de proximité de type WIFI ou BLUETOOTH. L'antenne d'un dispositif de transmission 2G, 3G, 4G est accordée sur les bandes de fréquences GSM. L'antenne d'un dispositif de transmission WIFI ou BLUETOOTH est accordée sur la bande de fréquences 2,4 GHz qui fait partie des bandes de fréquences ISM.

Dans les appareils électroniques les plus récents, le connecteur de raccordement externe est par exemple un connecteur haut débit aux standards USB 3.0, SATA 3 ou HDMI 3.0. En fonctionnement, de tels connecteurs de raccordement externe produisent un champ électromagnétique englobant la bande de fréquences utilisée par le dispositif de transmission radio de sorte que des interférences électromagnétiques sont créées entre le connecteur de raccordement externe et le dispositif de transmission radio.

Il est donc nécessaire de disposer le connecteur de raccordement externe et l'antenne en des positions éloignées l'une de l'autre afin que le champ magnétique produit par le connecteur de raccordement externe ne dégrade pas les performances du dispositif de transmission radio (baisse de débit ou perte de données, voire rupture de la liaison radio si le champ électromagnétique parasite a une puissance supérieure à celle des signaux de communication).

Parallèlement, la tendance actuelle en matière de design est à la réduction des dimensions de tels appareils électroniques pour les rendre le plus discret possible, ce qui tend à rapprocher le connecteur de raccordement externe de l'antenne du dispositif de transmission radio.

Pour limiter les interférences électromagnétiques entre le connecteur et l'antenne, il est en outre connu d'entourer le connecteur par un blindage sous la forme d'une carcasse métallique, et de blinder également les éléments raccordés au connecteur (câble ou support de données). Cependant, il demeure toujours, entre les différents blindages, des ruptures d'impédance formant autant de zones rayonnantes et de sources d'interférences électromagnétiques.

Il est par ailleurs connu du document US-A-2014/073182 un appareil électronique comportant une carte électronique pourvue d'un connecteur et d'un dispositif de transmission radio. Le connecteur est pourvu d'une barre de renfort en métal.

### OBJET DE L'INVENTION

Un but de l'invention est de fournir un appareil électronique, de faible encombrement, ayant de relativement bonnes performances en matière de transmission de signaux radio.

### BREF EXPOSE DE L'INVENTION

A cet effet, on prévoit, selon l'invention, un appareil électronique comprenant au moins une carte électronique pourvu d'un connecteur de raccordement externe et d'un dispositif de transmission radio comportant au moins une antenne accordée sur une fréquence prédéterminée, le connecteur ayant une carcasse métallique reliée à une masse de l'appareil électronique. Au moins une languette métallique est électriquement reliée à la carcasse métallique et est fixée sur celle-ci pour dépasser latéralement de la carcasse pour atténuer au voisinage de l'antenne au moins une partie d'un champ électromagnétique parasite produit par le connecteur en fonctionnement, la languette étant agencée pour résonner au moins à la fréquence prédéterminée.

Ainsi, la languette dévie le champ électromagnétique pour laisser, dans l'appareil électronique, une zone dans laquelle le champ électromagnétique parasite est atténué. L'antenne est positionnée dans cette zone de sorte que les performances du dispositif de transmission radio ne sont pas affectées par le champ électromagnétique parasite. En outre, il est aisé lors de la conception de positionner la languette de manière à positionner la zone d'atténuation à l'endroit le plus approprié dans l'appareil électronique.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique en perspective, avec écorché, d'un appareil électronique selon l'invention ;
- la figure 2 est une vue schématique partielle en perspective d'une première variante de cet appareil ;
- la figure 3 est une vue schématique partielle en perspective d'une deuxième variante de cet appareil.

### DESCRIPTION DETAILLEE DE L'INVENTION

En référence aux figures, l'appareil électronique selon l'invention comprend un boîtier 1 renfermant une carte électronique 2 pourvu d'un connecteur 3 de raccordement externe et d'un dispositif de transmission radio 4 comportant au moins une antenne, symbolisée en 5, accordée sur une fréquence prédéterminée. L'antenne 5 est positionnée dans le boîtier 1 à l'opposé du connecteur 3.

Le connecteur 3 est ici au standard USB 3.0 pour permettre le raccordement au connecteur 3 d'un support de données de type clé USB ou bien d'un câble au même standard. Le connecteur 3 a une structure connue en elle-même avec des broches électriquement reliées à des pistes conductrices de la carte électronique 2. Le connecteur 3 comprend en outre un blindage formé par une carcasse métallique 6 qui est électriquement reliée à une masse de la carte électronique 2 et qui entoure les broches du connecteur 3 et leur liaison aux pistes conductrices.

Le dispositif de transmission radio 4 est ici agencé pour fonctionner selon la norme WIFI et l'antenne 5 est accordée sur la bande de fréquences 2,4 GHz.

Conformément à l'invention, une languette métallique 7 est fixée sur la carcasse métallique 6 du connecteur 3 et est électriquement reliée à celle-ci. Plus précisément, la portion centrale de la languette métallique 7 est soudée sur le dessus de la carcasse métallique 6 perpendiculairement à une direction principale du connecteur 3 (direction d'engagement du connecteur homologue du connecteur 3). La languette métallique 7 a des portions d'extrémité qui dépassent latéralement de chaque côté de la carcasse métallique 3.

La languette métallique 7 a une longueur telle que les portions d'extrémité ont une longueur accordée à la longueur d'onde correspondant à la fréquence de résonance de l'antenne 5. Ainsi, la languette métallique 7 agit comme le doublet directeur d'une antenne de type Yagi pour atténuer au voisinage de l'antenne 5 un champ électromagnétique parasite produit par le connecteur 3 en fonctionnement.

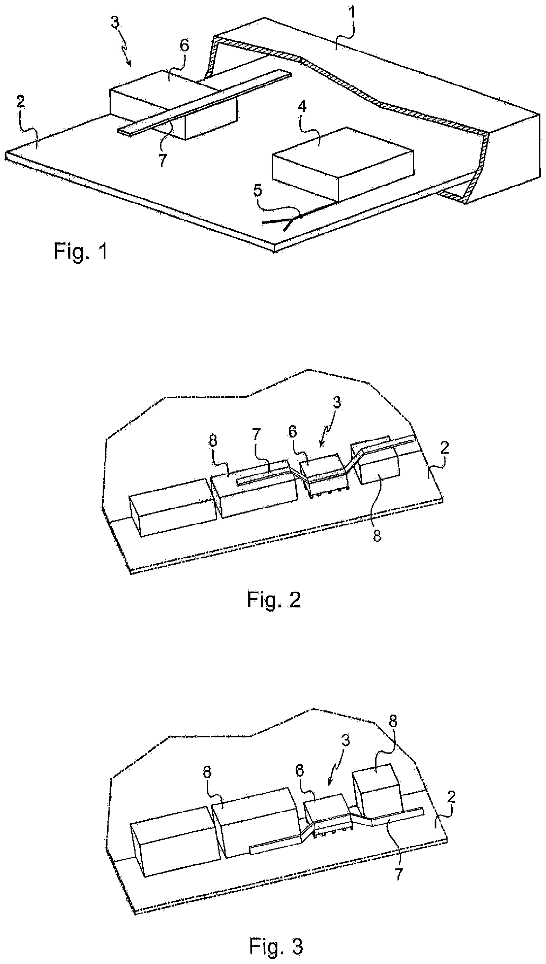

Sur la figure 1, on peut voir que la languette métallique 7 a une forme rectiligne.

Dans la variante de la figure 2, les portions d'extrémité de la languette métallique 7 ont des pliures de manière à s'étendre en partie autour de composants 8 fixés sur la carte électronique 2 au voisinage du connecteur 3.

Dans la variante de la figure 3, dont la structure est proche de celle de la figure 2, la portion centrale de la languette métallique 7 n'est pas fixée sur le dessus de la carcasse métallique 6 mais sur la paroi arrière de celle-ci.

Bien entendu, l'invention n'est pas limitée aux modes de réalisation décrits mais englobe toute variante entrant dans le champ de l'invention telle que définie par les revendications.

En particulier, l'appareil électronique 2 peut avoir une structure différente de celle décrite.

L'appareil électronique peut comprendre plusieurs cartes électroniques reliées les unes aux autres. Le dispositif de transmission radio 4 et le connecteur 3 peuvent appartenir à des cartes électroniques différentes.

L'appareil électronique peut comprendre un ou plusieurs connecteurs de raccordement externe, de même type ou de types différents. Au moins un de ces connecteurs est équipé d'une languette métallique 7.

L'appareil électronique peut comprendre plusieurs antennes accordées sur des fréquences prédéterminées et plusieurs languettes métalliques ayant chacune une longueur adaptée pour résonner à une des fréquences prédéterminées. L'appareil électronique peut alternativement comprendre une languette électronique conformée pour résonner à plusieurs fréquences.

D'autres normes ou standards peuvent être utilisés.

La languette métallique 7 peut être clipée, vissée, agrafée ou fixée par tout autre moyen sur la carcasse métallique 6.

La languette métallique 7 peut être fixée sur toute partie de la carcasse métallique 6, par exemple sur la face arrière de la carcasse métallique 6. La largeur de la languette métallique 7 peut s'étendre parallèlement à la carte électronique 2, ou perpendiculairement à la carte électronique 2.

## Revendications

1. Appareil électronique comprenant au moins une carte électronique (2) pourvu d'au moins un connecteur (3) de raccordement externe et d'au moins un dispositif de transmission radio (4) comportant au moins une antenne (5) accordée sur une fréquence prédéterminée, le connecteur ayant une carcasse métallique (6) reliée à une masse de l'appareil électronique, **caractérisé en ce qu'**au moins une languette métallique (7) est fixée sur la carcasse métallique du connecteur pour dépasser latéralement de la carcasse pour atténuer au voisinage de l'antenne un champ électromagnétique parasite produit par le connecteur en fonctionnement, la languette ayant une longueur adaptée pour résonner à la fréquence prédéterminée.

2. Appareil selon la revendication 1, dans lequel la languette (7) a une forme rectiligne.

3. Appareil selon la revendication 1, dans lequel la languette (7) est conformée pour s'étendre au-dessus d'au moins une partie d'un composant (8) de l'appareil électronique.

4. Appareil selon l'une quelconque des revendications précédentes, comprenant plusieurs antennes (5) accordées sur des fréquences prédéterminées et plusieurs languettes métalliques (7) ayant chacune une longueur adaptée pour résonner à une des fréquences prédéterminées.

## Patentansprüche

1. Elektronisches Gerät, umfassend mindestens eine elektronische Karte (2), die mit mindestens einem Verbinder (3) zur äußeren Verbindung und mit mindestens einer Funkübertragungsvorrichtung (4) versehen ist, die mindestens eine Antenne (5) umfasst, die auf eine vorbestimmte Frequenz abgestimmt ist, wobei der Verbinder ein Metallgehäuse (6) hat, das mit einer Masse des elektronischen Geräts verbunden ist, **dadurch gekennzeichnet, dass** mindestens eine Metallzunge (7) an dem Metallgehäuse des Verbinders fixiert ist, um seitlich über das Gehäuse hinauszuragen, um nahe der Antenne ein elektromagnetisches Störfeld abzuschwächen, das von dem Verbinder in Betrieb erzeugt wird, wobei die Zunge eine Länge hat, die angepasst ist, um bei der vorbestimmten Frequenz zu resonieren.

2. Gerät nach Anspruch 1, bei dem die Zunge (7) eine geradlinige Form hat.

3. Gerät nach Anspruch 1, bei dem die Zunge (7) so geformt ist, dass sie sich über mindestens einen Teil einer Komponente (8) des elektronischen Geräts erstreckt.

4. Gerät nach einem der vorhergehenden Ansprüche, umfassend mehrere Antennen (5), die auf vorbestimmte Frequenzen abgestimmt sind, sowie mehrere Metallzungen (7), die jeweils eine Länge haben, die angepasst ist, um bei einer der vorbestimmten Frequenzen zu resonieren.

## Claims

1. Electronic apparatus including at least one electronic card (2) provided with at least one connector (3) for external connection and at least one radio transceiver device (4) including at least one antenna (5) tuned to a predetermined frequency, the connector having a metal casing (6) connected to an electrical ground of the electronic apparatus, the apparatus being **characterized in that** at least one metal tab (7) is fastened to the metal casing of the connector in order to protrude sideways from the casing in order to attenuate, in the vicinity of the antenna, an interfering electromagnetic field produced by the connector in operation, the tab having a length that is suitable for resonating at the predetermined frequency.

2. Apparatus according to claim 1, wherein the tab (7) is rectilinear in shape.

3. Apparatus according to claim 1, wherein the tab (7) is shaped to extend beyond at least a portion of a component (8) of the electronic apparatus.

4. Apparatus according to any preceding claim, comprising a plurality of antennas (5) tuned to predetermined frequencies and a plurality of metal tabs (7), each having a length that is suitable for resonating at one of the predetermined frequencies.
